# EUROPEAN PATENT SPECIFICATION

(11) **EP 2 938 217 B1**
(45) Date of publication and mention of the grant of the patent: **23.07.2025**
(21) Application number: 13867260.5
(22) Date of filing: 23.12.2013
(51) Int. Cl.: A41D 31/02, A41B 17/00, D06M 17/00, B32B 5/02, B32B 5/26, B32B 7/04, B32B 7/08, B32B 7/12, B32B 7/14, B32B 3/04, A41B 9/00

(54) **GARMENTS INCLUDING ELASTIC COMPOSITE FABRIC**
KLEIDUNGSSTÜCKE MIT ELASTISCHEM VERBUNDSTOFF
VÊTEMENTS COMPRENANT UN TISSU COMPOSITE ÉLASTIQUE

(30) Priority: 28.12.2012 US 201261746700 P
(43) Date of publication of application: 04.11.2015
(73) Proprietor: The LYCRA Company UK Limited, Manchester M2 3DE (GB)
(72) Inventor: FARMER, Douglas K., Greensboro, North Carolina 27407-6109 (US)
(74) Representative: Carpmaels & Ransford LLP
(86) International application number: PCT/US2013/077395
(87) International publication number: WO 2014/105778

(56) References cited:
- EP-A2- 2 280 619
- WO-A1-2010/039579
- WO-A2-2005/123377
- WO-A2-2010/017297
- US-A- 5 036 551
- US-A- 5 329 638
- US-A1- 2005 176 867
- US-A1- 2010 209 654
- US-A1- 2010 297 914
- US-A1- 2010 325 782
- US-A1- 2012 115 379
- US-B2- 6 713 415

## Description

### BACKGROUND OF THE INVENTION

### Field of the Invention

The present invention relates to garments including at least one stretchable fabric composite laminate. The stretchable fabric composite laminate may be located at an edgeband, a strap or anywhere in the garment where additional stretch, elastic modulus, or support is desired.

### Summary of Related Technology

Interfacing is a woven or non-woven material that can be used in garment manufacture to provide stiffness to garment edge bands, such as waistbands, cuffs, and collars. However, these are generally not stretchable/elastic and therefore restrict the ability of the finished garment edging to stretch and recover. Some degree of stretch in waistbands and other garment openings is desirable to enhance comfort of the garment wearer or provide a greater fit range. In addition, support and stretch can be useful at any location within a garment for stretch and/or support.

US 6,713,415 B2 describes a laundry-durable stretchable composite fabric, based on two nonwoven outer layers and a pre-stretched inner layer of elastomeric fibers of at least 400 decitex and at least 3.15 threadlines/cm (eight threadlines/inch), and having a flat surface appearance.

WO 2005/123377 A2 describes a stretch laminate composite puckered fabric which is provided with at least one functional element which can conduct electricity, conduct light, provide electromagnetic fields or provide shielding from electromagnetic fields.

WO 2010/017297 A2 describes a gathered or puckered elastic composite structure for use in disposable hygiene products which includes a relatively inelastic substrate adhesively bonded with a hot melt adhesive to a certain selected type of elongated polyurethane material in the form of a film or one or more fibers or filaments.

US 2010/0297914 A1 describes a fabric having a memory function which may be used in brassieres. The fabric can be used to make a laminated fabric in which the memory fabric is sandwiched between a top surface fabric and a bottom surface fabric.

US 2005/176867 A1 concerns low application temperature thermoplastic hot melt adhesives which are particularly useful as elastic attachment adhesives.

WO 2010/039579 A1 describes multilayer materials suitable for use in disposable hygiene products. The materials comprise one or more extensible and non-elastic facing layers and one or more elastic layers adjacent to or sandwiched there between, the one or more facing layers comprising a polypropylene or a propylene-α-olefin elastomer.

### SUMMARY OF THE INVENTION

The present invention provides a garment with an opening or edgeband, said garment including two or more layers of a garment fabric and a stretchable fabric composite laminate. The stretchable fabric composite laminate includes two outer layers of fabric with a bonded inner layer of elastomeric fibers, wherein said stretchable fabric composite laminate is located between said two or more layers of a garment fabric, wherein said two or more layers are formed by folding a single piece of fabric and wherein said stretchable fabric composite laminate is placed at the point of folding. The stretchable fabric composite laminate is attached to the garment fabric, at the opening or edgeband, prior to fabric finishing. The stretchable fabric composite laminate has a width of 0.1 cm to 30.0 cm, including from 1.0 cm to 5.0 cm and a calculated flatness factor of not more than 4.4, wherein the calculated flatness factor is the ratio of percent decrease in thickness upon stretching from a relaxed state to ultimate elongation to the number of puckers per inch of relaxed composite fabric, wherein said stretchable fabric composite laminate has at least 6.3 puckers/cm (16 puckers per linear inch), and wherein said stretchable fabric composite laminate includes an adhesive in an amount of 10% to 35% by weight of the stretchable fabric composite laminate. The outer layers of the composite may be any suitable fabric such as a woven, knit or nonwoven. The inner layer of elastomeric fibers may be in any suitable orientation. One suitable orientation includes where the elastomeric fibers are aligned substantially parallel to each other. The composite may be attached by any suitable method, including but not limited to, adhesive, bonding, sewing, etc.

### DETAILED DESCRIPTION OF THE INVENTION

As used herein, the term "fabric" refers to a knitted, woven or nonwoven material. The knitted fabric may be flat knit, circular knit, warp knit, narrow elastic, and lace. The woven fabric may be of any construction, for example sateen, twill, plain weave, oxford weave, basket weave, and narrow elastic. The nonwoven material may be meltblown, spun bonded, wet-laid, carded fiber-based staple webs, and the like.

As used herein, the term "modulus" refers to a ratio of the stress on an item expressed in force per unit linear density or area.

In some embodiments are articles including a garment that has at least one opening that may be include an edgeband that includes a polyurethaneurea composition. Such garments may include tops, bottoms, hosiery, seamless garments, headwear, underwear and gloves.

In the present invention is disclosed a garment having at least one opening. The opening is also referred to as an edgeband. The edgeband may be included with a variety of different garments that include, but are not limited to, waistbands, cuffs and other arm openings and armbands, collars/neck openings, headbands, thigh highs, sock tops (the opening of a sock), leg warmers, wristbands, headbands, leg openings (legbands), and hems, among others. If the stretchable composite laminate is visible, it may be printed, dyed or calendared to give it a desirable appearance.

A stretchable composite laminate as described herein has a width of about 0.1 cm to about 30.0 cm. When smaller widths are included, such as about 1.0 cm to about 5.0 cm, the stretchable composite laminate may form a strap for a garment, such as a brassiere or a swimsuit.

In the present invention, a single layer of a fabric is folded to form two or more layers of a multiple layer article with a stretchable composite laminate as an intermediate layer. Where a stretchable composite laminate is placed at the point of folding, it may provide additional stretch recovery power, such as at a hem, or for a body shaping garment, to provide additional support.

Any type of fabric may be used as the garment or in an edgeband. This includes woven, nonwoven, knit, and lace fabrics, among others. The stretchable fabric composite laminate may be prepared separately and sewn to the garment or the stretchable fabric composite laminate may be incorporated into the garment opening during construction of the garment. Dyeing and finishing of the garment is conducted after assembly of the garment with the stretchable composite laminate.

There are some benefits to attaching the garment or edgeband to the stretchable composite laminate prior to fabric finishing. One example is where in a garment, fabrics, including 100% cotton fabrics, tend to shrink upon fabric finishing. By including a stretchable composite laminate in a garment, growth of the fabric is resisted in addition to the benefits of added elasticity and vertical stability.

In order to add additional support and other features, the stretchable composite laminate may be added to different areas of the article. For example, it may either extend through the entire area of the edgeband (continuous application) or to a selected portion or portions (discontinuous application) to provide different benefits. For example, pieces of the stretchable composite laminate may be placed in selected locations throughout the area of the opening or edge band.

One suitable method for accomplishing the attachment of the outer layers with inner elastomeric fibers of the stretchable fabric composite laminate it to apply an adhesive dispersion or solution to a fabric. The application may be by any of a variety of different methods. Methods for applying the dispersions or solutions of polyurethaneurea include spraying, kissing, printing, brushing, dipping, padding, dispensing, metering, painting, and combinations thereof. This may be followed by application of heat and/or pressure.

A variety of useful adhesives may be included in the stretchable fabric composite laminate. Examples of adhesives include any hot melt adhesive, a cyanoacrylate, an epoxy, polyvinyl acetate, a plastisol (including rubber), a thermoplastic (including polyurethanes, polyesters, and polyamides), silicone, a polyurethaneurea aqueous dispersion, a thermoset, a pressure sensitive adhesive and combinations thereof. The adhesive may be used to form the stretchable fabric composite laminate and/or to attach the laminate to a garment. The adhesive may include a continuous or discontinuous application. Examples of discontinuous application of adhesive include the group consisting of dots , vertical lines, horizontal lines, diagonal lines, a grid, and combinations thereof. An example of a commercially available hot melt adhesive in a dot configuration is available under the tradename Pinbond^{®}, by Freudenberg Gygli GmbH, Weinheim, Germany and is useful for bonding elastic textiles. Moreover, the polyurethaneurea aqueous dispersions may also be used as an adhesive to adhere more than one layer of any the garment or polyurethaneurea film as described in some embodiments.

A variety of different fibers and yarns may be used with the fabrics and garments of some embodiments. These include cotton, wool, acrylic, polyamide (nylon), polyester, spandex, regenerated cellulose, rubber (natural or synthetic), bamboo, silk, soy or combinations thereof.

Additives that may be optionally included in the stretchable fabric composite laminate include: anti-oxidants, UV stabilizers, colorants, pigments, crosslinking agents, phase change materials *(i.e.,* Outlast^{®}, commercially available from Outlast Technologies, Boulder, Colorado), antimicrobials, minerals *(i.e.,* copper), microencapsulated well-being additives *(i.e.,* aloe vera, vitamin E gel, aloe vera, sea kelp, nicotine, caffeine, scents or aromas), nanoparticles *(i.e.,* silica or carbon), calcium carbonate, flame retardants, antitack additives, chlorine degradation resistant additives, vitamins, medicines, fragrances, electrically conductive additives, and/or dye-assist agents *(i.e.,* Methacrol^{®}, commercially available from E. I. DuPont de Nemours, Wilmington, Delaware). Other additives which may be added to the prepolymer or the aqueous dispersion comprise adhesion promoters, anti-static agents, anti-cratering agents, anti-crawling agents, optical brighteners, coalescing agents, electroconductive additives, luminescent additives, flow and leveling agents, freeze-thaw stabilizers, lubricants, organic and inorganic fillers, preservatives, texturizing agents, thermochromic additives, insect repellants, and wetting agents.

Aqueous polyurethane dispersions may also be included as an adhesive. These are particularly suitable for adhesive shaped articles, which can be used for fabric bonding, lamination, and adhesion purposes when applied with heat and pressure for a relatively short period of time. Pressures, can for example, range from about atmospheric pressure to about 60 psi and times can range from less than about one second to about 30 minutes in accordance with the bonding method used.

Lamination can be carried out to secure the composite to a fabric using any method wherein heat is applied to the laminate surface. Methods of heat application include, for example, ultrasonic, direct heat, indirect heat, and microwave. Such direct lamination may provide an advantage in view of other methods used in the art in that the shaped article may not only bond to the a substrate via a mechanical interaction but also via a chemical bond. For example, if the substrate has any reactive hydrogen functional groups, such groups may react with the isocyanate and hydroxyl groups on the dispersion or shaped article, thereby providing a chemical bond between the substrate and the dispersion or shaped article. Such chemical bonding of the dispersion or shaped article to the substrate can give a much stronger bond. Such bonding may occur in dry shaped articles that are cured onto a substrate or in wet dispersions that are dried and cured in one step. Materials without an active hydrogen include polypropylene fabrics and anything with a fluoropolymer or a silicone based surface. Materials with an active hydrogen include, for example, nylon, cotton, polyester, wool, silk, cellulosics, acetates, metals, and acrylics. Additionally, articles treated with acid, plasma, or another form of etching may have active hydrogens for adhesion. Dye molecules also may have active hydrogens for bonding.

Methods and means for applying the adhesive of some embodiments include, but are not limited to: roll coating (including reverse roll coating); use of a metal tool or knife blade (for example, pouring a dispersion onto a substrate and then casting the dispersion into uniform thickness by spreading it across the substrate using a metal tool, such as a knife blade); spraying (for example, using a pump spray bottle); dipping; painting; printing; stamping; and impregnating the article. These methods can be used to apply the dispersion directly onto a substrate without the need of further adhesive materials and can be repeated if additional/heavier layers are required. The dispersions can be applied to any fabrics of knits, wovens or nonwovens made from synthetic, natural, or synthetic/natural blended materials for coating, bonding, lamination and adhesion purposes. The water in the dispersion can be eliminated with drying during the processing (for example, via air drying or use of an oven), leaving the precipitated and coalesced polyurethane layer on the fabrics to form an adhesive bond.

An example of a tool that can be used for applying dispersions is a knife blade. The knife blade can be made of metal or any other suitable material. The knife blade can have a gap of a predetermined width and thickness. The gap may range in thickness, for example, from 0.005 to 1.27 mm (0.2 to 50 mils), such as a thickness of 0.127 mm (5 mils), 0.254 mm (10 mils), 0.381 mm (15 mils), 0.635 mm (25 mils), 0.762 mm (30 mils), or 1.143 mm (45 mils).

The thickness of the films, solutions, and dispersions may vary depending on the application. In the case of dry shaped articles, the final thickness may, for example, range from about 0.0025 to 6.35 mm (0.1 to 250 mil), such as from about 0.0127 (0.5 mil) to about 0.635 mm (25 mil), including from about 0.0254 mm (1 mil) to about 0.152 mm (6 mil).

Suitable thicknesses include about 0.0127 mm (0.5 mil) to about 0.304 mm (12 mil), about 0.0127 mm (0.5 mil) to about 0.254 mm (10 mil), and about 0.0381 mm (1.5 mil) to about 0.229 mm (9 mil). For aqueous dispersions, the amount used may, for example, range from about 2.5 g/m² to about 6.40 kg/m², such as from about 12.7 to about 635 g/m², including from about 25.4 to about 152.4 g/m².

Examples of apparel or garments that include a stretchable composite laminate, include but are not limited to: undergarments, brassieres, panties, lingerie, swimwear, shapers, camisoles, hosiery, sleepwear, wetsuits, scrubs, space suits, uniforms, hats, garters, sweatbands, belts, activewear, outerwear, rainwear, cold-weather jackets, pants, shirtings, dresses, blouses, mens and womens tops, sweaters, corsets, vests, knickers, socks, knee highs, thigh highs, dresses, blouses, aprons, tuxedos, bisht, abaya, hijab, jilbab, thoub, burka, cape, costumes, diving suit, kilt, kimono, jerseys, gowns, protective clothing, sari, sarong, skirts, spats, stola, suits, straitjacket, toga, tights, towel, uniform, veils, wetsuit, medical compression garments, bandages, suit interlinings, waistbands, and all components therein.

A suitable stretchable nonwoven laminate which is useful for the garments of the present invention is disclosed in U.S. Patent No. 6,713,415. This includes the fabric described as follows:
The stretchable fabric composite laminate of some aspects is composed of two outer layers of nonwoven fabric of substantially equal width and a uniform inner layer of substantially parallel, equally spaced elastomeric fibers of equal decitex which are capable of complete recovery from extensions as great as 300%. The elastomeric fibers can be substantially completely relaxed in the absence of externally applied forces. Knit or woven fabric may be used in place of the nonwoven.

"Uniform inner" layer means that the fibers are of substantially equal decitex and spacing, are substantially parallel to each other, and are subjected to substantially the same tension during preparation of the composite fabric.

The fabrics can have a basis weight ranging from about 10 to about 30 g/m2. Many types of fabrics, including nonwoven fabrics, are suitable. Representative examples are nonwovens composed of thermally bonded, spunbonded and hydroentangled fibers, and the two outer layers can be the same or different. For example, they are composed of synthetic polymeric fibers such as polyolefin, polyester and polyamide fibers.

The layer of elastomeric fibers is composed of at least 3.15 threadlines/cm (8 threadlines/inch) of width, each threadline being at least 400 decitex. For example, the number of threadlines per cm is not greater than 6.30 (16 threadlines/inch) or it is 4.72 (12 threadlines/inch). The combination of these two parameters may be chosen to provide a minimum retractive force of about 38.9 g/cm (0.22 pounds per inch), as measured in the finished product when it is stretched at 150% of its original length. The elastomeric fibers are substantially parallel to the edges of the nonwoven fabrics. One suitable elastomeric fiber is spandex fiber.

The three layers may be bonded together by an adhesive composition which constitutes from about 10% to about 35% of the weight of the composite fabric. Alternatively, adhesive content in the composite above these levels can make the fabric bond to itself. The adhesive compositions can be hot melt adhesives, such as styrene-based block copolymers, including styrene/isoprene and styrene/butadiene block copolymers. The styrene-based portions may be at least about 30 wt% of the total adhesive. Each element (layer) in the composite is bonded to at least one other element of the composite. The adhesive only partially covers the inside surface of the outer fabric layer. The adhesive penetrates to the outside of each outer layer to an extent less than about 10% based on the surface area of each outer layer. "Inside surface" refers to a nonwoven layer surface that is within the composite fabric of the invention.

The composite stretchable puckered fabric can be prepared by placing between two layers of nonwoven fabric uniformly tensioned elastomeric filaments which are spaced a substantially equal distance apart and are of substantially equal decitex no less than 400 decitex per filament. There may be at least 3.15 filaments (threadlines) per cm of width (8 filaments (threadlines) per inch of width) and the threadlines are substantially parallel to each other and to the edges of the nonwoven fabrics. The three layers are bonded with an adhesive followed by removing the tension after bonding. This process produces a puckered fabric having a substantially uniform flat surface appearance which results from small substantially uniform puckers.

In a suitable process for preparing the puckered fabric, a layer of substantially parallel and equally spaced elastomeric fibers is stretched not less than 100% and placed on top of one of the layers of nonwoven fabric. An adhesive, such as a hot melt adhesive, is applied onto the elastomeric fibers and bottom nonwoven layer. The other layer of nonwoven is then placed on top of the adhesive-treated combination and the combined structure is bonded by heat and pressure while the elastomeric fibers remain in the stretched condition. Alternatively, the adhesive can be applied to the elastomeric fibers prior to their placement between layers of nonwoven fabric. When the bonding is completed, the tension is substantially completely released and the composite fabric relaxes to form the desired puckered structure.

The hot melt adhesive can be applied in several different ways. In one method, the melted adhesive can be deposited as a discontinuous web from a spray nozzle, a process known as melt blowing. In another method, the melted adhesive can be deposited as a solid stream from a nozzle which moves in a spiral pattern as the web passes, a process known as spiral spray. A pattern in which the adhesive only partially covers an inside surface of nonwoven layers, such as is produced by melt-blowing or spiral spray, results in a uniform, flat surface appearance of the composite fabric. By "partially covers" it is meant that the adhesive is present at one part of the inside surface of the nonwoven but absent at an adjacent part. This can also be accomplished by applying a "dot matrix" pattern, as well.

The products of this invention provide a desirably smooth, tailored appearance and are useful primarily as insert elastic nonwovens, for example, as the elastic inserts in outerwear shorts.

The flatness or smoothness of the puckered fabrics of this invention can be measured by measuring the change in thickness when the fabric is stretched from its relaxed state to its ultimate elongation. The smoother the appearance of the fabric, the smaller the change in thickness on stretching. The percent decrease in thickness in one aspect is not greater than about 64%. Alternatively, one can count the number of raised portions, referred to as puckers, per linear inch of the relaxed composite fabric. Starting from a given extended length, as the number of puckers increases in the relaxed fabric, the amplitude of each pucker decreases. Fabrics with acceptable smoothness have at least 6.3 puckers/cm (16 puckers per linear inch).

A relationship of these two values, the ratio of percent decrease in thickness to the number of puckers per inch, defines the fabric of this invention well. This ratio, referred to as the flatness factor, must be about 4.4 or less, including less than 3.6, for a stretchable fabric to meet the limitation of substantially uniform flat appearance of this invention.

## Claims

1. A garment with an opening or edgeband, said garment including two or more layers of a garment fabric and a stretchable fabric composite laminate;
said stretchable fabric composite laminate including two outer layers of fabric with a bonded inner layer of elastomeric fibers;
wherein said stretchable fabric composite laminate is located between said two or more layers of a garment fabric;
wherein said two or more layers are formed by folding a single piece of fabric and wherein said stretchable fabric composite laminate is placed at the point of folding;
wherein said stretchable fabric composite laminate is attached to said garment fabric, at the opening or edgeband, prior to fabric finishing;
wherein said stretchable fabric composite laminate has a width of 0.1 cm to 30.0 cm, including from 1.0 cm to 5.0 cm and a calculated flatness factor of not more than 4.4
wherein the calculated flatness factor is the ratio of percent decrease in thickness upon stretching from a relaxed state to ultimate elongation to the number of puckers per inch of relaxed composite fabric;
wherein said stretchable fabric composite laminate has at least 6.3 puckers/cm (16 puckers per linear inch); and
wherein said stretchable fabric composite laminate includes an adhesive in an amount of 10% to 35% by weight of the stretchable fabric composite laminate.

2. The garment of claim 1, wherein said stretchable fabric composite laminate:
(a) is attached to said garment fabric by bonding, adhering, sewing, laminating or a combination thereof;
(b) is attached to said garment fabric by an adhesive between said garment fabric and said stretchable fabric composite laminate;
(c) is laundry-durable.

3. The garment of claim 1, wherein said elastomeric fibers:
(a) comprise melt-spun elastomer; or
(b) are selected from the group consisting of spandex, elastomeric polyolefin, natural rubber filament, and synthetic rubber filament, and combinations thereof.

4. The garment of claim 1, wherein said garment is selected from the group consisting of tops, bottoms, hosiery, seamless garments, headwear, intimate apparel, swimwear and gloves.

5. The garment of claim 4, wherein said stretchable fabric composite laminate is included at an edgeband of said garment, wherein said edgeband is selected from the group consisting of an armband, a cuff, a collar, a waistband, a legband, a headband, and a hem.

6. The garment of claim 1, wherein said garment includes a component which includes said stretchable fabric composite laminate; and optionally wherein said component of said garment is selected from the group consisting of a brassiere wing, a shaper panel and a strap.

7. The garment of claim 1, wherein the adhesive comprises a discontinuous application.

8. The garment of claim 7, wherein said discontinuous application is selected from the group consisting of dots, vertical lines, horizontal lines, diagonal lines, a grid, and combinations thereof.

9. The garment of claim 8, wherein said adhesive is selected from the group consisting of a hot melt adhesive, a cyanoacrylate, an epoxy, polyvinyl acetate, a plastisol, a thermoplastic, silicone, a polyurethane aqueous dispersion, and combinations thereof.

10. The garment of claim 1, wherein said two outer layers of fabric are nonwoven fabric layers, and wherein said two outer layers of nonwoven fabric included in said stretchable fabric composite laminate are of substantially equal width; and
each outer layer of said stretchable fabric composite laminate has an inside surface and an outside surface with respect to the stretchable fabric composite laminate; and
said inner layer of elastomeric fibers includes at least 3.15 threadlines/cm (8 threadlines/inch); and
the elastomeric fibers have a linear density of about 400 decitex or greater.

11. The garment of claim 10, wherein the elastomeric fibers have a linear density of 800 decitex to about 2500 decitex.

12. The garment of claim 10, wherein said stretchable fabric composite laminate has a retractive force of about 38.9 g/cm (0.22 lb/inch), as measured in the finished product when it is stretched at 150% of its original length.

13. The garment of claim 1, wherein said adhesive only partially covers the inside surface of at least one outer layer and penetrates to the outside of each outer layer to an extent less than about 10% based on the surface area of each outer layer.

14. The garment of claim 1, wherein said stretchable fabric composite laminate has a width of about 0.20 cm to about 30.0 cm, including from about 0.30 cm to about 10.0cm.

## Patentansprüche

1. Kleidungsstück mit einer Öffnung oder einem Kantenbund, wobei das Kleidungsstück zwei oder mehr Schichten eines Kleidungsstückstoffs und ein dehnbares Verbundstofflaminat umfasst;
wobei das dehnbare Verbundstofflaminat zwei äußere Schichten Stoff mit einer gebondeten inneren Schicht elastomerer Fasern umfasst;
wobei sich das dehnbare Verbundstofflaminat zwischen den zwei oder mehr Schichten eines Kleidungsstückstoffs befindet;
wobei die zwei oder mehr Schichten durch Falten eines einzelnen Stücks Stoff gebildet sind und wobei das dehnbare Verbundstofflaminat an der Faltstelle angeordnet ist;
wobei das dehnbare Verbundstofflaminat vor der Stofffertigstellung an dem Kleidungsstückstoff, an der Öffnung oder dem Kantenbund angebracht wurde;
wobei das dehnbare Verbundstofflaminat eine Breite von 0,1 cm bis 30,0 cm, einschließlich von 1,0 cm bis 5,0 cm, und einen berechneten Flachheitsfaktor von höchstens 4,4 aufweist,
wobei der berechnete Flachheitsfaktor das Verhältnis der prozentualen Abnahme der Dicke beim Dehnen aus einem entspannten Zustand zu einer Bruchdehnung zur Anzahl der Falten pro Zoll entspannter Verbundstoff ist;
wobei das dehnbare Verbundstofflaminat mindestens 6,3 Falten/cm (16 Falten pro linearem Zoll) aufweist; und wobei das dehnbare Verbundstofflaminat einen Klebstoff in einer Menge von 10 Gew.-% bis 35 Gew.-% des dehnbaren Verbundstofflaminats umfasst.

2. Kleidungsstück nach Anspruch 1, wobei das dehnbare Verbundstofflaminat:
(a) durch Bonden, Kleben, Nähen, Laminieren oder eine Kombination davon an dem Kleidungsstückstoff angebracht ist;
(b) mittels eines Klebstoffs zwischen dem Kleidungsstückstoff und dem dehnbaren Verbundstofflaminat an dem Kleidungsstückstoff angebracht ist;
(c) wäschebeständig ist.

3. Kleidungsstück nach Anspruch 1, wobei die elastomeren Fasern:
(a) schmelzgesponnenes Elastomer umfassen; oder
(b) ausgewählt sind aus der Gruppe bestehend aus Elastan, elastomerem Polyolefin, Naturkautschukfilament und Synthetikkautschukfilament und Kombinationen davon.

4. Kleidungsstück nach Anspruch 1, wobei das Kleidungsstück ausgewählt ist aus der Gruppe bestehend aus Oberteilen, Unterteilen, Strümpfen, nahtlosen Kleidungsstücken, Kopfbedeckungen, Unterwäsche, Badebekleidung und Handschuhen.

5. Kleidungsstück nach Anspruch 4, wobei das Kleidungsstück das dehnbare Verbundstofflaminat an einem Kantenbund umfasst, wobei der Kantenbund ausgewählt ist aus der Gruppe bestehend aus einem Ärmelbund, einer Manschette, einem Kragen, einem Taillenbund, einem Beinbund, einem Stirnband und einem Saum.

6. Kleidungsstück nach Anspruch 1, wobei das Kleidungsstück einen Bestandteil umfasst, der das dehnbare Verbundstofflaminat umfasst; und wobei der Bestandteil des Kleidungsstücks gegebenenfalls ausgewählt ist aus der Gruppe bestehend aus einem BH-Flügel, einem Formungsfüllelement und einem Riemen.

7. Kleidungsstück nach Anspruch 1, wobei der Klebstoff eine unterbrochene Aufbringung umfasst.

8. Kleidungsstück nach Anspruch 7, wobei die unterbrochene Aufbringung ausgewählt ist aus der Gruppe bestehend aus Punkten, vertikalen Linien, horizontalen Linien, diagonalen Linien, einem Gitter und Kombinationen davon.

9. Kleidungsstück nach Anspruch 8, wobei der Klebstoff ausgewählt ist aus der Gruppe bestehend aus einem Heißklebstoff, einem Cyanoacrylat, einem Epoxid, Polyvinylacetat, einem Plastisol, einem Thermoplast, Silikon, einer wässrigen Polyurethandispersion und Kombinationen davon.

10. Kleidungsstück nach Anspruch 1, wobei die zwei äußeren Schichten Stoff Vliesstoffschichten sind und wobei die zwei äußeren Schichten Vliesstoff, die das dehnbare Verbundstofflaminat umfasst, im Wesentlichen die gleiche Breite aufweisen; und
jede äußere Schicht des dehnbaren Verbundstofflaminats eine Innenoberfläche und eine Außenoberfläche in Bezug auf das dehnbare Verbundstofflaminat aufweist; und
die innere Schicht elastomerer Fasern mindestens 3,15 Fadenlinien/cm (8 Fadenlinien/Zoll) umfasst; und
die elastomeren Fasern eine lineare Dichte von etwa 400 Decitex oder mehr aufweisen.

11. Kleidungsstück nach Anspruch 10, wobei die elastomeren Fasern eine lineare Dichte von 800 Decitex bis etwa 2500 Decitex aufweisen.

12. Kleidungsstück nach Anspruch 10, wobei das dehnbare Verbundstofflaminat bei Messung in dem fertiggestellten Produkt, wenn es bei 150 % seiner ursprünglichen Länge gedehnt wird, eine Rückstellkraft von etwa 38,9 g/cm (0,22 Pfund/Zoll) aufweist.

13. Kleidungsstück nach Anspruch 1, wobei der Klebstoff nur teilweise die Innenoberfläche von mindestens einer äußeren Schicht bedeckt und in die äußere Schicht zu einem geringeren Ausmaß als etwa 10 %, bezogen auf die Oberfläche jeder äußeren Schicht, eindringt.

14. Kleidungsstück nach Anspruch 1, wobei das dehnbare Verbundstofflaminat eine Breite von etwa 0,20 cm bis etwa 30,0 cm, einschließlich von etwa 0,30 cm bis etwa 10,0 cm, aufweist.

## Revendications

1. Vêtement comportant une ouverture ou une bande de bordure, ledit vêtement comprenant deux couches ou plus d'un tissu de vêtement et un stratifié composite de tissu extensible ;
ledit stratifié composite de tissu extensible comprenant deux couches extérieures de tissu comportant une couche intérieure liée de fibres élastomériques ;
dans lequel ledit stratifié composite de tissu extensible est situé entre lesdites deux couches ou plus d'un tissu de vêtement ;
dans lequel lesdites deux couches ou plus sont formées par pliage d'une seule pièce de tissu et dans lequel ledit stratifié composite de tissu extensible est placé au niveau du point de pliage ;
dans lequel ledit stratifié composite de tissu extensible est fixé audit tissu de vêtement, au niveau de l'ouverture ou de la bande de bordure, avant la finition du tissu ;
dans lequel ledit stratifié composite de tissu extensible a une largeur de 0,1 cm à 30,0 cm, y compris de 1,0 cm à 5,0 cm et un facteur de planéité calculé ne dépassant pas 4,4
dans lequel le facteur de planéité calculé est le rapport entre la diminution en pourcentage de l'épaisseur lors de l'étirement depuis un état détendu jusqu'à l'allongement ultime et le nombre de fronces par pouce de tissu composite détendu ;
dans lequel ledit stratifié composite de tissu extensible a au moins 6,3 fronces/cm (16 fronces par pouce linéaire) ; et
dans lequel ledit stratifié composite de tissu extensible comprend un adhésif en une quantité de 10 % à 35 % en poids du stratifié composite de tissu extensible.

2. Vêtement selon la revendication 1, dans lequel ledit stratifié composite de tissu extensible :
(a) est fixé audit tissu de vêtement par liaison, collage, couture, stratification ou une combinaison correspondante ;
(b) est fixé audit tissu de vêtement par un adhésif entre ledit tissu de vêtement et ledit stratifié composite de tissu extensible ;
(c) est résistant au lavage.

3. Vêtement selon la revendication 1, dans lequel lesdites fibres élastomériques :
(a) comprennent un élastomère filé à l'état fondu ; ou
(b) sont choisis dans le groupe constitué par le spandex, une polyoléfine élastomérique, un filament de caoutchouc naturel et un filament de caoutchouc synthétique, et des combinaisons correspondantes.

4. Vêtement selon la revendication 1, dans lequel ledit vêtement est choisi dans le groupe constitué par des hauts, des bas, des bas de corps, des vêtements sans couture, des chapeaux, des sous-vêtements, des maillots de bain et des gants.

5. Vêtement selon la revendication 4, dans lequel ledit stratifié composite de tissu extensible est inclus au niveau d'une bande de bord dudit vêtement, dans lequel ladite bande de bord est choisie dans le groupe constitué par un brassard, un revers, un col, une ceinture, une bande de jambe, un bandeau et un ourlet.

6. Vêtement selon la revendication 1, dans lequel ledit vêtement comprend un composant qui comprend ledit stratifié composite de tissu extensible ; et éventuellement dans lequel ledit composant dudit vêtement est choisi dans le groupe constitué par une aile de soutien-gorge, un panneau conformateur et une sangle.

7. Vêtement selon la revendication 1, dans lequel l'adhésif comprend une application discontinue.

8. Vêtement selon la revendication 7, dans lequel ladite application discontinue est choisie dans le groupe constitué par des points, des lignes verticales, des lignes horizontales, des lignes diagonales, une grille, et des combinaisons correspondantes.

9. Vêtement selon la revendication 8, dans lequel ledit adhésif est choisi dans le groupe constitué par un adhésif thermofusible, un cyanoacrylate, un époxy, un poly(acétate de vinyle), un plastisol, un thermoplastique, un silicone, une dispersion aqueuse de polyuréthane et des combinaisons correspondantes.

10. Vêtement selon la revendication 1, dans lequel lesdites deux couches extérieures de tissu sont des couches de tissu non tissé, et dans lequel lesdites deux couches extérieures de tissu non tissé incluses dans ledit stratifié composite de tissu extensible sont de largeur sensiblement égale ; et
chaque couche extérieure dudit stratifié composite de tissu extensible présente une surface intérieure et une surface extérieure par rapport au stratifié composite de tissu extensible ; et
ladite couche interne de fibres élastomériques comprend au moins 3,15 lignes de fils/cm (8 lignes de fils/pouce) ; et
les fibres élastomériques ont une densité linéaire d'environ 400 décitex ou plus.

11. Vêtement selon la revendication 10, dans lequel les fibres élastomériques ont une densité linéaire de 800 décitex à environ 2 500 décitex.

12. Vêtement selon la revendication 10, dans lequel ledit stratifié composite de tissu extensible a une force de rétraction d'environ 38,9 g/cm (0,22 lb/pouce), telle que mesurée dans le produit fini lorsqu'il est étiré à 150 % de sa longueur d'origine.

13. Vêtement selon la revendication 1, dans lequel ledit adhésif ne recouvre que seulement partiellement la surface intérieure d'au moins une couche extérieure et pénètre jusqu'à l'extérieur de chaque couche extérieure en une mesure inférieure à environ 10 % sur la base de l'aire de surface de chaque couche extérieure.

14. Vêtement selon la revendication 1, dans lequel ledit stratifié composite de tissu extensible a une largeur d'environ 0,20 cm à environ 30,0 cm, y compris d'environ 0,30 cm à environ 10,0 cm.
